# EUROPÄISCHE PATENTSCHRIFT

(11) **EP 3 169 846 B1**
(45) Veröffentlichungstag und Bekanntmachung des Hinweises auf die Patenterteilung: **04.04.2018**
(21) Anmeldenummer: 15730969.1
(22) Anmeldetag: 24.06.2015
(51) Int. Cl.: E01B 27/06, E01B 27/10, B61D 7/12, B65G 67/08

(54) **REINIGUNGSFAHRZEUG ZUM REINIGEN VON SCHOTTER EINES GLEISES**
CLEANING VEHICLE FOR CLEANING BALLAST OF A TRACK
VÉHICULE DE NETTOYAGE DE BALLAST D'UNE VOIE

(30) Priorität: 14.07.2014 AT 2812014 U
(43) Veröffentlichungstag der Anmeldung: 24.05.2017
(73) Patentinhaber: Plasser & Theurer Export von Bahnbaumaschinen Gesellschaft m.b.H., 1010 Wien (AT)
(72) Erfinder: HÖTZENDORFER, Patrick, A-4209 Engerwitzdorf (AT)
(86) Internationale Anmeldenummer: PCT/EP2015/001264
(87) Internationale Veröffentlichungsnummer: WO 2016/008563

(56) Entgegenhaltungen:
- WO-A1-2014/076160
- AT-B- 351 584

## Beschreibung

Die Erfindung betrifft ein Reinigungsfahrzeug zum Reinigen von Schotter eines Gleises, mit einem Schienenfahrzeug und einer zur Schotterreinigung vorgesehenen Siebanlage, wobei zum Transport des in Containern gespeicherten Schotters ein durch Kranschienen auf dem Schienenfahrzeug in einer Fahrzeuglängsrichtung verfahrbarer Portalkran vorgesehen ist, sowie ein Verfahren.

Derartige Fahrzeuge sind durch AT 351 584 oder AT 373 833 bekannt. Vom Reinigungsfahrzeug abgegebener Abraum wird in Containern gespeichert, die mit Hilfe eines Portalkranes auf Ladeflächen von Schienenfahrzeugen abgestellt werden.

Ein schienengebundenes Transportsystem für eine Gleisbaumaschine ist in WO2014/076160A beschrieben.

Die Aufgabe der vorliegenden Erfindung liegt nun in der Schaffung eines Reinigungsfahrzeuges sowie eines Verfahrens der eingangs genannten Art, mit dem eine vereinfachte Reinigung von Schotter möglich ist.

Diese Aufgabe wird erfindungsgemäß mit einem Reinigungsfahrzeug sowie mit einem Verfahren der gattungsgemäßen Art durch die im Kennzeichen von Anspruch 1 bzw. 5 angeführten Merkmale gelöst.

Mit den erfindungsgemäßen Merkmalen ist eine konstruktiv relativ einfache Schotterreinigung erzielbar, wobei der Schottertransport weitestgehend durch Container durchführbar ist.

Weitere Vorteile der Erfindung ergeben sich aus den Unteransprüchen und der Zeichnungsbeschreibung.

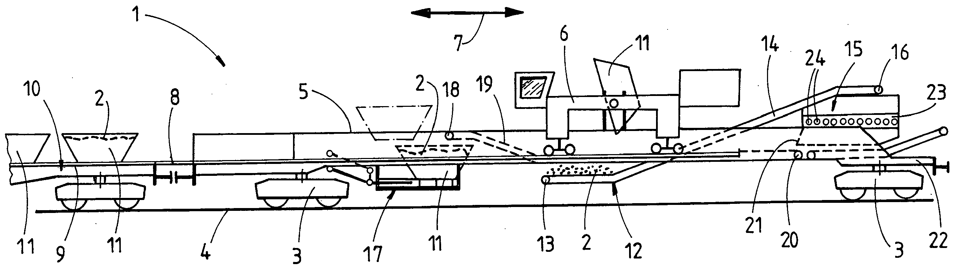

Im Folgenden wird die Erfindung anhand eines in der Zeichnung dargestellten Ausführungsbeispieles näher beschrieben.

Ein in einer Seitenansicht dargestelltes Reinigungsfahrzeug 1 zum Reinigen von Schotter 2 weist einen durch Schienenfahrwerke 3 auf einem Gleis 4 verfahrbaren Fahrzeugrahmen 5 auf. Zum Verfahren eines Portalkranes 6 sind in einer Fahrzeuglängsrichtung 7 verlaufende Kranschienen 8 vorgesehen. In einer Vielzahl von auf Ladeflächen 9 anschließender Schienenfahrzeuge 10 abstellbaren Containern 11 ist Schotter 2 gespeichert.

Unter Bildung einer Abwurfstation 12 zum Abwurf des verunreinigten Schotters 2 ist ein Aufnahmeende 13 eines ersten Förderbandes 14 vorgesehen, das ein oberhalb einer Siebanlage 15 positioniertes Abwurfende 16 aufweist.

Unter Bildung einer Beladestation 17 zum Abwurf des gereinigten Schotters 2 in einen leeren Container 11 ist ein Abwurfende 18 eines zweiten Förderbandes 19 vorgesehen, dessen Aufnahmeende 20 einer Auslaßöffnung 21 der Siebanlage 15 zugeordnet ist.

Die bezüglich der Fahrzeuglängsrichtung 7 hintereinander angeordneten Belade- und Abwurfstationen 17, 12 sind zwischen zwei Schienenfahrwerken 3 angeordnet, während die Siebanlage 15 an einem Ende 22 des Fahrzeugrahmens 5 positioniert ist. Das Aufnahmeende 13 des ersten Förderbandes 14 sowie die Beladestation 17 sind jeweils zwischen den beiden Kranschienen 8 unterhalb des Fahrzeugrahmens 5 angeordnet.

Die Siebanlage 15 ist als Sternsieb 23 mit einer Vielzahl von in der Fahrzeuglängsrichtung 7 hintereinander angeordneten und rotierbaren Reinigungswalzen 24 gebildet: Alternativ sind natürlich auch andere bekannte Ausbildungen möglich.

Im Folgenden wird die Funktionsweise des Reinigungsfahrzeuges 1 bzw. das mit diesem durchführbare Verfahren zum Reinigen von Schotter 2 kurz beschrieben. Dabei werden die beschriebenen Transporte der Container 11 mit dem Portalkran 6 durchgeführt. Verunreinigter Schotter 2 wird in einem Container 11 von der eine Vielzahl von Containern 11 umfassenden Ladefläche 9 des Fahrzeuges 10 zu einer Abwurfstation 12 transportiert und dort entleert. Mit dem ersten Förderband 14 wird der Schotter zur Siebanlage 15 transportiert. Der geleerte Container 11 wird auf einer Beladestation 17 abgestellt und durch das zweite Förderband 19 mit in der Siebanlage 15 gereinigtem Schotter 2 gefüllt. Anschließend wird der gefüllte Container 11 zur Ladefläche 9 zurück transportiert und auf dieser abgestellt. Daraufhin wiederholt sich der Zyklus erneut.

## Patentansprüche

1. Reinigungsfahrzeug (1) zum Reinigen von Schotter (2) eines Gleises (4), mit einem Schienenfahrzeug (10) und einer zur Schotterreinigung vorgesehenen Siebanlage (15), wobei zum Transport des in Containern (11) gespeicherten Schotters (2) ist ein durch Kranschienen (8) auf dem Schienenfahrzeug (10) in einer Fahrzeuglängsrichtung (7) verfahrbarer Portalkran (6) vorgesehen ist,
***gekenntzeichnet durch die folgende Merkmale:***
a) unter Bildung einer Abwurfstation (12) zum Abwurf des verunreinigten Schotters (2) ist ein Aufnahmeende (13) eines ersten Förderbandes (14) vorgesehen, das ein oberhalb der Siebanlage (15) positioniertes Abwurfende (16) aufweist,
b) unter Bildung einer Beladestation (17) zum Abwurf des gereinigten Schotters (2) in einen leeren Container (11) ist ein Abwurfende (18) eines zweiten Förderbandes (19) vorgesehen, dessen Aufnahmeende (20) einer Auslaßöffnung (21) der Siebanlage (15) zugeordnet ist.

2. Reinigungsfahrzeug nach Anspruch 1, **dadurch gekennzeichnet, dass** die bezüglich der Fahrzeuglängsrichtung (7) hintereinander angeordnete Belade- und Abwurfstation (17, 12) zwischen zwei Schienenfahrwerken (3) angeordnet sind, während die Siebanlage (15) an einem Ende (22) eines Fahrzeugrahmens (5) positioniert ist.

3. Reinigungsfahrzeug nach Anspruch 1, **dadurch gekennzeichnet, dass** das Aufnahmeende (13) des ersten Förderbandes (14) sowie das Abwurfende (18) des zweiten Förderbandes (19) jeweils zwischen den Kranschienen (8) unterhalb des Fahrzeugrahmens (5) angeordnet sind.

4. Reinigungsfahrzeug nach einem der Ansprüche 1 bis 3, **dadurch gekennzeichnet, dass** die Siebanlage (15) als Sternsieb (23) mit einer Vielzahl von in der Fahrzeuglängsrichtung (7) hintereinander angeordneten und rotierbaren Reinigungswalzen (24) ausgebildet ist.

5. Verfahren zum Reinigen von Schotter eines Gleises auf einem Schienenfahrzeug (10), wobei Transporte von Containern (11) durch einen Portalkran (6) durchgeführt werden, **gekennzeichnet durch folgende Merkmale:**
a) der verunreinigte Schotter (2) wird in einem Container (11) von einer eine Vielzahl von Containern (11) umfassenden Ladefläche (9) des Schienenfahrzeuges (10) zu einer Abwurfstation (12) transportiert, auf ein Förderband (14) abgeworfen und damit zu einer Siebanlage (15) transportiert,
b) der geleerte Container (11) wird auf einer Beladestation (17) abgestellt, mit durch die Siebanlage (15) gereinigtem Schotter (2) gefüllt und anschließend zur Ladefläche (9) zurück transportiert und auf dieser abgestellt, wonach sich der Zyklus gemäß den Merkmalen a) und b) wiederholt.

## Claims

1. A cleaning vehicle (1) for cleaning ballast (2) of a track (4), including a rail vehicle (10) and a screening installation (15) provided for ballast cleaning, wherein a gantry crane (6) mobile on the rail vehicle (10) via crane rails (8) in a longitudinal direction (7) of the vehicle is provided for the transport of the ballast (2) stored in containers (11),
**characterized by the following features:**
a) forming a discharge station (12) for discharging the soiled ballast (2), a receiving end (13) of a first conveyor belt (14) is provided, the latter having a discharge end (16) positioned above the screening installation (15),
b) forming a loading station (17) for discharging the cleaned ballast (2) into an empty container (11), a discharge end (18) of a second conveyor belt (19) is provided, the receiving end (20) of which is associated with an outlet opening (21) of the screening installation (15).

2. A cleaning vehicle according to claim 1, **characterized in that** the loading- and discharge stations (17, 12), arranged one behind the other with regard to the longitudinal direction (7) of the vehicle, are arranged between two on-track undercarriages (3), while the screening plant (15) is positioned at an end (22) of a vehicle frame (5).

3. A cleaning vehicle according to claim 1, **characterized in that** the receiving end (13) of the first conveyor belt (14) and the discharge end (18) of the second conveyor belt (19) are each arranged underneath the vehicle frame (5) between the crane rails (8).

4. A cleaning vehicle according to one of claims 1 to 3, **characterized in that** the screening plant (15) is designed as a star screen (23) having a multitude of rotatable cleaning rollers (24) arranged one following the other in the longitudinal direction (7) of the vehicle.

5. A method for cleaning ballast of a track on a rail vehicle (10), wherein transports of containers (11) are carried out by a gantry crane (6), **characterized by the following features:**
a) the soiled ballast (2) is transported in a container (11) from a loading area (9) - containing a multitude of containers (11) - of the rail vehicle (10) to a discharge station (12), is discharged onto a conveyor belt (14), and is transported by the same to a screening installation (15),
b) the emptied container (11) is placed on a loading station (17), is filled with ballast (2) cleaned by the screening installation (15), and is subsequently transported back to the loading area (9) and placed on the same, after which the cycle according to features a) and b) is repeated.

## Revendications

1. Véhicule de nettoyage (1) pour le nettoyage de ballast (2) d'une voie ferrée (4), avec un véhicule ferroviaire (10) et une installation de tamis (15) prévue pour le nettoyage de ballast, dans lequel une grue à portique (6) pouvant être déplacée par des rails de grue (8) sur le véhicule ferroviaire (10) dans une direction longitudinale de véhicule (7) est prévue pour le transport du ballast (2) stocké dans des conteneurs (11),
**caractérisé par** les caractéristiques suivantes :
a) une extrémité de réception (13) d'une première bande transporteuse (14) qui présente une extrémité de déchargement (16) positionnée au-dessus de l'installation de tamis (15) est prévue en formant une station de déchargement (12) pour le déchargement du ballast contaminé (2),
b) une extrémité de déchargement (18) d'une seconde bande transporteuse (19) dont l'extrémité de réception (20) est associée à une ouverture de sortie (21) de l'installation de tamis (15) est prévue en formant une station de chargement (17) pour le déchargement du ballast nettoyé (2) dans un conteneur vide (11).

2. Véhicule de nettoyage selon la revendication 1, **caractérisé en ce que** les stations de chargement et de déchargement (17, 12) disposées l'une derrière l'autre par rapport à la direction longitudinale de véhicule (7) sont disposées entre deux mécanismes de roulement ferroviaires (3) tandis que l'installation de tamis (15) est positionnée à une extrémité (22) d'un châssis de véhicule (5).

3. Véhicule de nettoyage selon la revendication 1, **caractérisé en ce que** l'extrémité de réception (13) de la première bande transporteuse (14) ainsi que l'extrémité de déchargement (18) de la seconde bande transporteuse (19) sont chacune disposées entre les rails de grue (8) en dessous du châssis de véhicule (5).

4. Véhicule de nettoyage selon une des revendications 1 à 3, **caractérisé en ce que** l'installation de tamis (15) est réalisée en tant que tamis en étoile (23) avec une pluralité de rouleaux de nettoyage (24) disposés les uns derrière les autres dans la direction longitudinale de véhicule (7) et pouvant être tournés.

5. Procédé de nettoyage de ballast d'une voie ferrée sur un véhicule ferroviaire (10), dans lequel des transports de conteneurs (11) par une grue à portique (6) sont effectués, **caractérisé par** les caractéristiques suivantes :
a) le ballast contaminé (2) est transporté dans un conteneur (11) d'une surface de chargement (9) comprenant une pluralité de conteneurs (11) du véhicule ferroviaire (10) à une station de déchargement (12), déchargé sur une bande transporteuse (14) et transporté avec celle-ci vers une installation de tamis (15),
b) le conteneur vidé (11) est déposé sur une station de chargement (17), rempli de ballast (2) nettoyé par l'installation de tamis (15), puis transporté en retour vers la surface de chargement (9) et déposé sur celle-ci, suite à quoi le cycle se répète conformément aux caractéristiques a) et b).
